Europäisches Patentamt

**European Patent Office**

Office européen des brevets

(11) Veröffentlichungsnummer: **0 081 066**
**A1**

(12) # EUROPÄISCHE PATENTANMELDUNG

(21) Anmeldenummer: **82109416.6**

(22) Anmeldetag: **12.10.82**

(51) Int. Cl.³: **G 06 F 3/16**

(30) Priorität: **04.12.81 DE 3148049**

(43) Veröffentlichungstag der Anmeldung:
**15.06.83 Patentblatt 83/24**

(84) Benannte Vertragsstaaten:
**AT BE CH GB LI NL SE**

(71) Anmelder: **Neumann Elektronik GmbH**
**Bülowstrasse 104 - 110**
**D-4330 Mülheim 1(DE)**

(72) Erfinder: **Neumann, Dirk, Dipl.-Ing.**
**Schemelsbruch 11**
**D-4330 Mülheim 1(DE)**

(74) Vertreter: **Feder, Heinz, Dr. et al,**
**Dominikanerstrasse 37**
**D-4000 Düsseldorf 11(DE)**

(54) **Elektronischer Textgeber zur gleichzeitigen oder zeitversetzten Abgabe textgleicher oder textverschiedener Ansagen.**

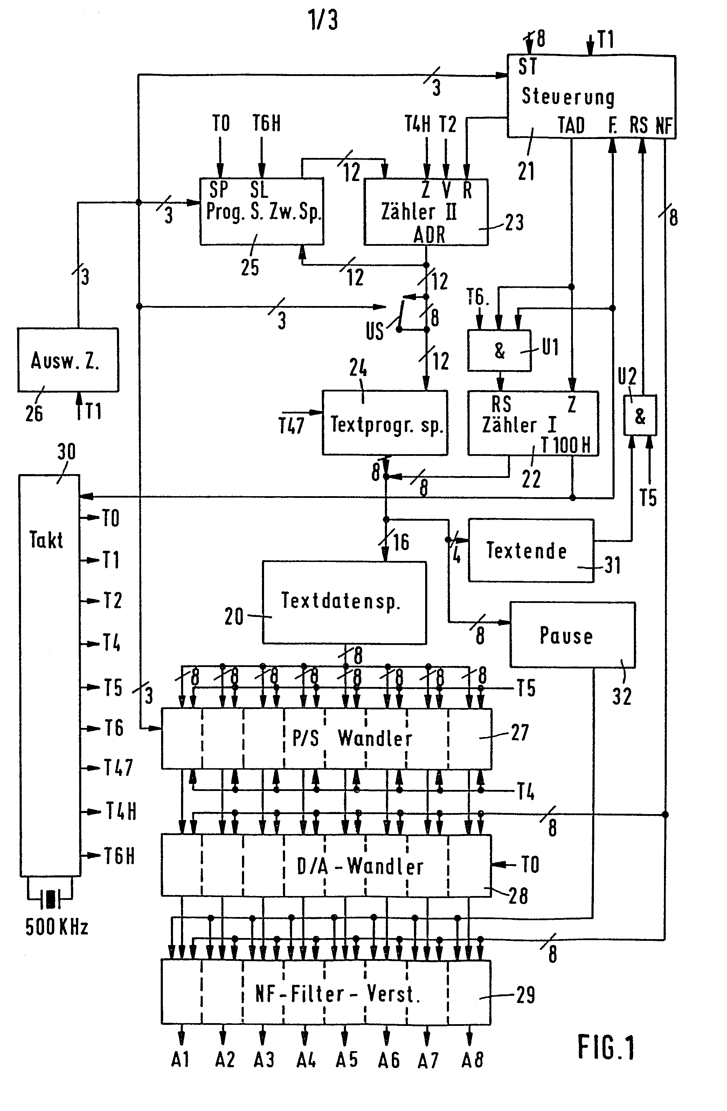

(57) Ein elektronischer Textgeber zur gleichzeitigen oder zeitversetzten Abgabe textgleicher oder textverschiedener Ansagen an mehreren getrennten Textgeberausgängen in Form von analogen elektrischen Signalen. Die Texte sind aus in digitaler Form in einem als Festwertspeicher ausgebildeten Textdatenspeicher (20 - Figure 1) gespeicherten Textteilen zusammensetzbar. An eine Steuereinrichtung (21) ist ein Textdatenspeicher (20) angeschlossen, dem pro Textgeberausgang ein Parallelseriellwandler (27) und ein Digitalanalogwandler (28) nachgeschaltet ist. Der Textdatenspeicher (20) ist in Speichersegmente mit jeweils gleicher Anzahl von Speicherplätzen aufgeteilt, in die jeweils Textteile gleicher zeitlicher Länge eingespeichert sind. Zum gleichzeitigen Auslesen ein oder mehrerer Speichersegmente dient ein erster Speicheradressenzähler (22), in Abhängigkeit von durch die Steuereinrichtung (21) abgegebenen Startsignalen angesteuert werden. Die unterschiedlich getakteten Steuersignale des ersten und zweiten Speicheradressenzählers sind so gewählt, daß das Auslesen der Speichersegemente durch den ersten Speicheradressenzähler (22) jeweils zwischen zwei aufeinanderfolgenden Zählschritten des zweiten Speicheradressenzählers (23) erfolgt. Dem zweiten Speicheradressenzähler (23) ist ein Textprogrammspeicher (24) nachgeschaltet, in den ein Steuerprogramm zur Ansteuerung der Speichersegmente eingespeichert ist.

./...

EP 0 081 066 A1

FIG.1

Elektronischer Textgeber zur gleichzeitigen oder zeitversetzten Abgabe
textgleicher oder textverschiedener
Ansagen.

Die Erfindung betrifft einen elektronischen Textgeber zur gleichzeitigen oder zeitversetzten Abgabe,
textgleicher oder textverschiedener Ansagen an mehreren
getrennten Textgeberausgängen in Form von analogen
elektrischen Signalen, bei dem die Texte aus in digitaler Form in einem als Festwertspeicher ausgebildeten
Textdatenspeicher gespeicherten Textteilen zusammensetzbar sind, mit einer Steuereinrichtung, an die der Textdatenspeicher über Speicheradressenzähler angeschlossen
ist und mit pro Textgeberausgang einem, dem Textdatenspeicher nachgeschalteten Parallel-Seriell-Wandler und
jeweils einem auf diesen folgenden Digital-Analog-Wandler.

Derartige Textgeber sind an sich bekannt. Sie werden
u.a. bei Sprachausgabe über das Telefonnetz, beispielsweise bei automatischen Anrufbeantwortern eingesetzt.

- 2 -

Die Umformung der im Textdatenspeicher in digitaler Form gespeicherten Texte kann dabei gemäß dem bekannten Verfahren der Deltamodulation erfolgen. Der dem Textdatenspeicher nachgeschaltete Digital-Analog-Wandler enthält dann einen Deltademodulator.

Die bekannten Textgeber haben den Nachteil, daß jeweils nur eine Ansage unter Umständen mehrmals hintereinander abgegeben werden kann. Sollen mehrere textgleiche oder textverschiedene Ansagen gleichzeitig oder zeitversetzt abgegeben werden, so müssen mehrere komplette Textgeber eingesetzt werden. Dies bedingt einen erheblichen konstruktiven Aufwand. Andererseits kann es bei Anrufbeantwortern, aber auch bei anderen Anwendungen erwünscht sein, einige textgleiche oder textverschiedene Ansagen an mehreren Ausgängen zeitversetzt abzugeben.

Die der Erfindung zugrunde liegende Aufgabe bestand darin, einen elektronischen Textgeber der eingangs erwähnten Art zu schaffen, bei dem es mit geringem Aufwand möglich ist, mehrere textgleiche oder textverschiedene Ansagen gleichzeitig oder zeitversetzt abzugeben.

Die Lösung dieser Aufgabe erfolgt erfindungsgemäß dadurch, daß der Textdatenspeicher in Speichersegmente mit jeweils gleicher Anzahl von Speicherplätzen aufgeteilt ist, in die jeweils Textteile gleicher zeitlicher Länge eingespeichert sind und zum gleichzeitigen Auslesen ein oder mehrerer Speichersegmente ein erster Speicheradressenzähler dient, während die Ansteuerung bestimmter ausgewählter Speichersegmente von mindestens einem zweiten Speicheradressenzähler aus in Abhängigkeit von ein oder mehreren von der Steuereinrichtung abgegebenen Startsignalen erfolgt und die unterschiedlich getakteten Steuersignale des ersten und zweiten Speicheradressenzählers so gewählt sind, daß das Auslesen der Speichersegmente durch den ersten Speicheradressenzähler jeweils zwischen zwei aufeinanderfolgenden Zählschritten des zweiten Speicheradressenzählers erfolgt.

Die Erfindung beruht auf dem Grundgedanken, den Ansagetext aus Textteilen gleicher zeitlicher Länge zusammenzusetzen. Diese verschiedenen Textteile können dann mit gemeinsamem Anfang und gemeinsamem Ende synchron ausgelesen werden und ihre Verteilung auf verschiedene Textgeberausgänge und die Aneinanderreihung der Textteile zum Gesamttext kann so gesteuert werden, daß beispielsweise an den verschiedenen Textgeberausgängen die gleiche Ansage zeitversetzt um ein ganzzahliges Vielfaches der zeitlichen Länge der Textteile erscheint.

Es ist aber auch möglich, durch geeignete Auswahl der Textteile und entsprechende Steuerung ihrer Aneinanderreihung zeitgleich oder zeitversetzt textverschiedene Ansagen an den Textgeberausgängen abzugeben.

Wie weiter unten anhand eines Ausführungsbeispieles ausführlich erläutert, steuert bei dem erfindungsgemäßen Textgeber der erste Speicheradressenzähler den Ablauf der synchronen Ausgabe mehrerer Texteile, während der zweite Speicheradressenzähler die Auswahl und Zusammensetzung der hintereinander ausgegebenen Textteile steuert.

Ein besonderer Vorteil des erfindungsgemäßen Textgebers besteht in dem wesentlich geringeren konstruktiven Aufwand, insbesondere im Hinblick auf den Bedarf an

- 4 -

Speicherplätzen, gegenüber dem Einsatz mehrerer kompletter Textgeber.

Es ist für den ganzen Textgeber nur ein Textdatenspeicher und ein erster Speicheradressenzähler notwendig. Auch Textteile, die in der Gesamtheit aller Ansagen mehrmals vorkommen, werden nur einmal im Textdatenspeicher abgespeichert.

Grundsätzlich kann pro Textgeberausgang mit einem zweiten Speicheradressenzähler gearbeitet werden, dem jeweils ein Textprogrammspeicher nachgeschaltet ist.

Bei einer bevorzugten Ausführungsform des erfindungsgemäßen Textgebers ist es jedoch möglich, mit einem einzigen zweiten Speicheradressenzähler und einem einzigen Textprogrammspeicher für die gesamte Einrichtung auszukommen bei Verwendung eines Programmschrittzwischenspeichers und eines Auswahlzählers, wie in Patentanspruch 3 angegeben, und weiter unten ausführlich erläutert.

Die Benutzung der Parallel-Seriell-Wandler als Textdatenzwischenspeicher (Patentanspruch 4) eröffnet die optimale Ausnutzung des einen Textdatenspeichers. Da das parallele Einlesen der Textdaten in die Textdatenzwischenspeicher wesentlich weniger Zeit erfordert als das serielle Auslesen, ist es möglich, mehrere Textdatenzwischenspeicher im Zyklus nacheinander einzulesen und fortlaufend auszulesen.

Im folgenden wird anhand der Zeichnungen ein Ausführungsbeispiel für den erfindungsgemäßen Textgeber näher erläutert.

In den Zeichnungen zeigen:

Fig. 1 in einem Blockschaltbild einen Textgeber gemäß der Erfindung mit acht Textgeberausgängen,

Fig. 2 in einem Diagramm die wichtigsten zur Steuerung des Textgebers nach Fig. 1 dienenden Steuersignale,

Fig. 3 schematisch den Aufbau des Textdatenspeichers eines Textgebers nach Fig. 1.

In den Fig. 1 bis 3 ist ein elektronischer Textgeber dargestellt, mit dem acht textgleiche oder textunterschiedliche Ansagen an acht getrennten Textgeberausgängen A1 bis A8 gleichzeitig oder zeitversetzt abgegeben werden können.

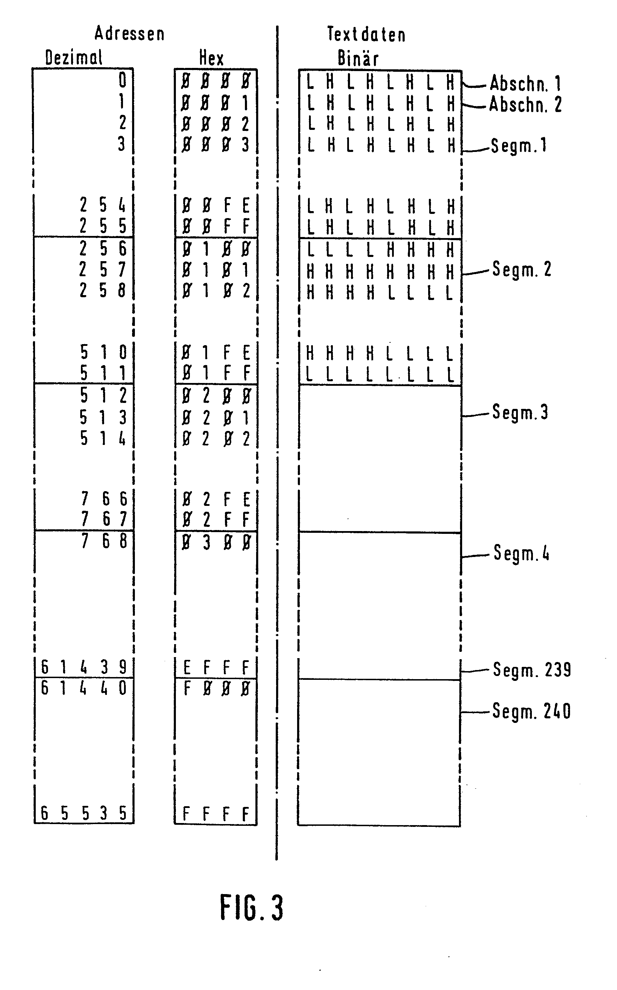

Die Textdaten sind in einem Textdatenspeicher 20 fest eingespeichert, dessen Aufbau in Fig. 3 schematisch dargestellt ist. Dieser Textdatenspeicher 20 ist in 240 Segmente zu je 2048 Bit aufgeteilt. Diese 2048 Bit sind in Abschnitten zu je 8 Bit parallel angeordnet. Dies entspricht pro Speichersegment einem Adressenbereich von 100 Hex (256 dezimal).

Bei Anwendung einer Abtastfrequenz von 62,5 kHz entspricht ein Segment einem Textteil von 32,8 ms Dauer.

Die Anordnung der Segmente im Textdatenspeicher ist nun so, daß die Anfangsadressen aller Segmente auf den niederwertigen Stellen gleich sind. Jedes Segment beginnt bei einer Adresse, die auf XX00 Hex endet und endet bei einer Adresse, die auf XXFF Hex endet.

Diese Anordnung hat den Vorteil, daß der Umfang des Textablaufprogramms sich erheblich verringern läßt.

In den dem Textdatenspeicher 20 vorgeschalteten Textprogrammspeicher 24, der den Ablauf der Ansagen, d.h. die
Aufeinanderfolge der in den Segmenten gespeicherten
Textteile steuert, müssen jeweils nur die nichtgleichen
höherwertigen Stellen der Adressen eingespeichert
werden, während die niederwertigen Stellen der Adressen
für jedes Textteil gleich sind. Deshalb können die
einzelnen Segmente synchron von einem gemeinsamen ersten
Speicheradressenzähler 22 aus, der von 0 bis FF Hex (0 -
255 dezimal) zählt, ausgelesen werden.

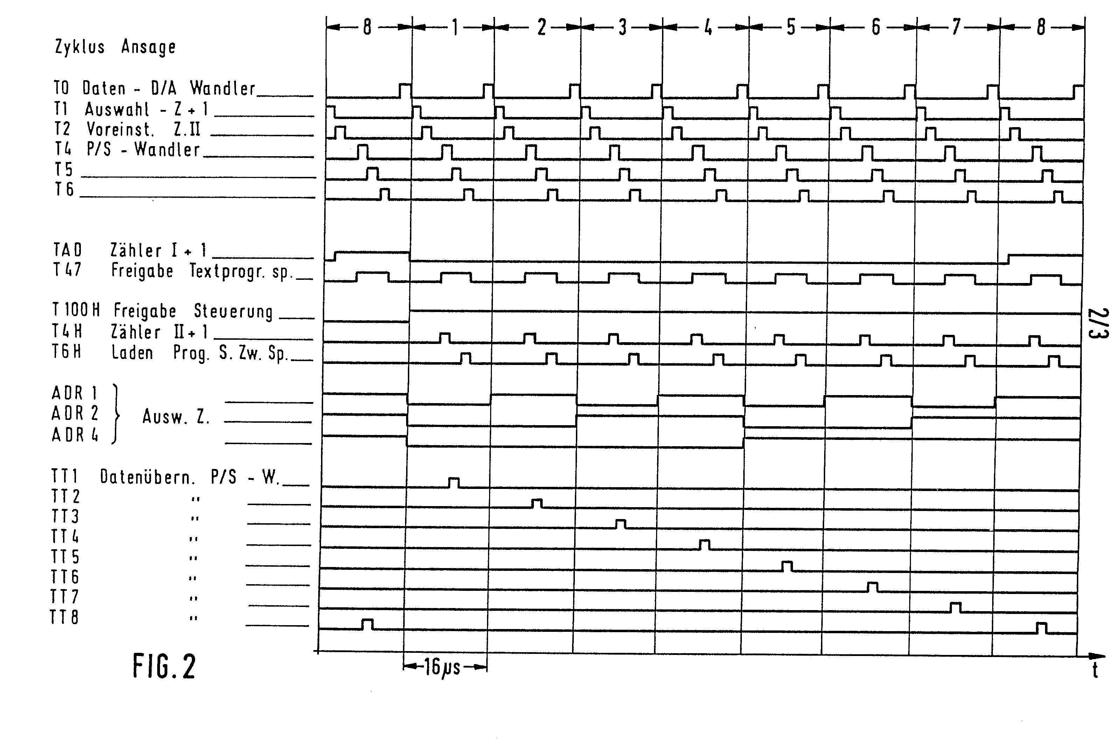

Start und Ablauf jeder Ansage erfolgen nach einem
starren Taktschema. Die den verschiedenen Punkten der
Einrichtung zugeführten getakteten Steuersignale werden
aus einer Frequenz von 500 kHZ erzeugt und von einem
Taktgeber 30 abgegeben. Der zeitliche Verlauf der in
Fig. 1 angegebenen Taktsignale T0, T1, T2, T4, T5, T6,
T47, T4H und T6H sind zusammen mit anderen für die
Steuerung wichtigen Signalen in Fig. 2 dargestellt.

Aus der Grundfrequenz von 500 kHz wird eine Abtastfrequenz von 62,5 kHz erzeugt. (S. Signale T0 - T6).

Die Startsignale für den Beginn einer Ansage werden an
eine Steuereinrichtung 21 (achtfacher Starteingang)
gegeben.

Der Start einer Anlage ist nur im Abstand der zeitlichen
Länge von 32,8 ms der in den Segmenten gespeicherten
Textteile und dann auch nur im Bereich des ersten Abschnittes (s.Fig. 3) eines Segments innerhalb eines
Fensters von 128 Mikrosekunden Dauer möglich. Hierzu
wird die Steuereinrichtung 21 durch ein Steuersignal

- 7 -

T100H (s. Fig. 2) freigegeben, das jeweils vom ersten Speicheradressenzähler 22 nach dessen Ablauf abgegeben wird.

Die Starteingänge der Steuereinrichtung 21 werden von dem mit dem Grundtakt (T1) angesteuerten Auswahlzähler 26 abgefragt, der ein den verschiedenen Ein-Ausgängen des Textgebers zugeordnetes Steuersignal ADR 1, ADR 2, ADR 4 abgibt. Während der Freigabe durch das Signal T100H wird der zweite Adressenzähler 23 durch das Signal T4H für jeden Kanal um einen Schritt weitergesetzt. Vom zweiten Speicheradressenzähler aus (Ausgang ADR) werden die Programmschritte an den Textprogrammspeicher 24 gegeben und gleichzeitig im Programmschrittzwischenspeicher 25 festgehalten. Durch letzteren werden die Programmstände aller Ansagen in Bezug auf die in den Segmenten des Textdatenspeichers 20 gespeicherten Textteile (höherwertige Stellen der Adressen), die sich jedesmal nach Abgabe eines Textteils ändern, festgehalten bis zum nächsten Schritt des zweiten Speicheradressenzählers 23, der aufgrund dieser gespeicherten Werte jeweils auf den aktuellen Programmstand pro Kanal voreingestellt wird. Das Schreiben und Lesen des Programmschrittzwischenspeichers 25 erfolgt mittels des Signals T6H (Eingang SL), das Speichern mit dem Signal T0 (Ein-gang SP). Die Voreinstellung des zweiten Speicheradressenzählers 23 erfolgt mit dem Signal T2 (Eingang V), seine Rücksetzung über den Eingang R.

Über den Textprogrammspeicher 24 (Freigabesignal T47) werden, festgelegt durch die höherwertigen Stellen der Anfangsadressen, bestimmte Segmente im Textdatenspeicher 20 angesteuert und, gesteuert vom ersten Speicheradressenzähler 20 (Signal TAD), aufgrund ihrer

- 8 -

gleichen niederwertigen Stellen der Adressen gemeinsam ausgelesen. Der Unterschied der Texte ergibt sich dabei aus den höherwertigen Stellen der Adressen.

Die Textdaten werden aus dem Textdatenspeicher in die als Textteilzwischenspeicher wirkenden, einmal pro Kanal vorhandenen Parallel-Seriell-Wandler 27 übernommen, und zwar jeweils abschnittsweise (8 Bit).

Die Zuordnung der jeweiligen Parallel-Seriell-Wandler 27 erfolgt wiederum durch die vom Auswahlzähler 26 abgegebenen Signale ADR1, ADR2, ADR4.

Die Datenübernahme erfolgt im Takt der Signale TT1 bis TT8, gesteuert durch T5. Die Frequenz der TT-Takte beträgt 7,81 kHZ und ihr Impuls-Pauseverhältnis ist 2:126 und der zeitliche Abstand zweier benachbarter TT-Takte beträgt 16 Mikrosekunden.

Das serielle Auslesen der Daten aus den Parallel-Seriell-Wandlern 27 erfolgt mit dem Signal T4. Durch die Zwischenspeicherung der Textdaten wird erreicht, daß nur ein kurzzeitiger Zugriff auf den Textdatenspeicher 20 zu Beginn jedes Abschnittes eines Textteiles erforderlich ist. Bei der dargestellten Zwischenspeicherung eines Abschnittes von 8 Bit beträgt der Zeitbedarf zum Auslesen aus dem Textdatenspeicher 20 und Einlesen in den Parallel-Seriell-Wandler 27  16 Mikrosekunden. Bei einer Abtastfrequenz von 62,5 kHz entspricht dies einer Textdauer von 128 Mikrosekunden. Der Textdatenspeicher 20 ist also zur Abfrage einer Ansage für eine Zeit belegt, die ca. 12,5% der eigentlichen Ansagezeit beträgt. Hieraus folgt, daß bei dieser Auslesung bis zu 8 Ansagen aus dem Textdatenspeicher gleichzeitig abgespielt werden können.

- 9 -

Die den Parallel-Seriell-Wandlern nachgeschalteten Digital-Analog-Wandler 28 werden mit dem Grundtakt T0 angesteuert.

Eine Vorrichtung 31 zur Erkennung eines Textendes, gibt über ein UND-Gatter U2 (Takt T5) ein Rücksetzsignal an die Steuereinrichtung 21 (Eingang RS).

Die Rücksetzung des ersten Speicheradressenzählers 22 (Eingang RS) erfolgt über ein UND-Gatter U1, dem die Signale T6, TAD und T100H zugeführt werden.

Die den Digital-Analog-Wandlern 28 nachgeschaltete Vorrichtung zur Filterung und Verstärkung der erzeugten NF-Signale enthält gleichzeitig eine Überwachungsvorrichtung zur Anzeige von Störungen. Diese Überwachungsvorrichtung ist nur eingeschaltet, wenn tatsächlich NF-Signale abgegeben werden. Eine Vorrichtung 32 zur Erkennung vorgegebener Sprachpausen schaltet in diesen Sprachpausen die Überwachungsvorrichtung ab. Auf diese Weise ist eine sehr empfindliche Überwachung der NF-Ausgänge möglich. Sprachpausen können jeweils durch mehrmaliges Durchlaufen eines vorgegebenen Speichersegmentes erzeugt werden.

Mit dem beschriebenen Textgeber können auch textunterschiedliche Ansagen abgegeben werden. Die unterschiedlichen Textprogramme können dabei aus dem einen Textprogrammspeicher 24 durch Umschalten des Adressenbereiches des Textprogrammspeichers (Umschalter US) mit dem Auswahlzähler 26 gewonnen werden.

- 1 -

Patentansprüche:

1. Elektronischer Textgeber zur gleichzeitigen oder zeitversetzten Abgabe textgleicher oder textverschiedener Ansagen an mehreren getrennten Textgeberausgängen in Form von analogen elektrischen Signalen, bei dem die Texte aus in digitaler Form in einem als Festwertspeicher ausgebildeten Textdatenspeicher gespeicherten Textteilen zusammensetzbar sind, mit einer Steuereinrichtung, an die der Textdatenspeicher über Speicheradressenzähler angeschlossen ist und mit pro Textgeberausgang einem, dem Textdatenspeicher nachgeschalteten Parallel-Seriell-Wandler und jeweils einem auf diesen folgenden Digital-Analog-Wandler, dadurch gekennzeichnet, daß der Textdatenspeicher (20) in Speichersegmente (Segm. 1, Segm.2...) mit jeweils gleicher Anzahl von Speicherplätzen aufgeteilt ist, in die jeweils Textteile gleicher zeitlicher Länge eingespeichert sind, und zum gleichzeitigen Auslesen ein oder mehrerer Speichersegmente ein erster Speicheradressenzähler (22) dient, während die Ansteuerung bestimmter ausgewählter Speichersegmente von mindestens einem zweiten Speicheradressenzähler (23) aus in Abhängigkeit von ein oder mehreren von der Steuereinrichtung (21) abgegebenen Startsignalen erfolgt und die unterschiedlich getakteten Steuersignale des ersten und zweiten Speicheradressenzählers so gewählt sind, daß das Auslesen der Speichersegmente durch den ersten Speicheradressenzähler jeweils zwischen zwei aufeinanderfolgenden Zählschritten des zweiten Speicheradressenzählers erfolgt.

2. Elektronischer Textgeber nach Anspruch 1, dadurch gekennzeichnet, daß dem zweiten Speicheradressenzähler (23) jeweils ein als Festwertspeicher ausgebildeter Textprogrammspeicher (24) nachgeschaltet ist, in den ein Steuerprogramm zur Ansteuerung der Speichersegmente eingespeichert ist.

3. Elektronischer Textgeber nach Anspruch 2, dadurch gekennzeichnet, daß ein einziger, den Textgeberausgängen (A1...A8) gemeinsam zugeordneter, zweiter Speicheradressenzähler (23) mit einem nachgeschalteten Textprogrammspeicher (24) vorhanden ist, und der Ausgang des zweiten Speicheradressenzählers mit dem Eingang eines Programmschritt-Zwischenspeichers (25) verbunden ist, dessen Ausgang mit dem Voreinstell-Eingang des zweiten Speicheradressenzählers (23) verbunden ist zur Zwischenspeicherung für jedes an den Textprogrammspeicher (24) abgegebene Steuersignal, wobei der Programmschritt-Zwischenspeicher (25) von einem Auswahlzähler (26), dessen Zählrate der Anzahl der Textgeberausgänge entspricht, so angesteuert ist, daß die zwischengespeicherten Signalwerte zur Voreinstellung des zweiten Speicheradressenzählers dienen und bei jedem Zählschritt des zweiten Speicheradressenzählers (23) die den verschiedenen Textgeberausgängen (A1...A8) zugeordneten Steuersignale in einer fest vorgegebenen Reihenfolge dem Textprogrammspeicher (24) zugeführt werden.

4. Elektronischer Textgeber nach Anspruch 3, dadurch gekennzeichnet, daß die Parallel-Seriell-Wandler (27) Textteilzwischenspeicher sind, in die in einer fest vorgegebenen Reihenfolge, vom Auswahlzähler (26) gesteuert, Textdaten aus dem Textdatenspeicher parallel eingegeben und aus denen sie mit der vorgegebenen Grundtaktfrequenz seriell ausgelesen werden.

5. Elektronischer Textgeber nach einem der Ansprüche 1 bis 4, gekennzeichnet durch eine Vorrichtung (29) zur Überwachung der von den Digital-Analog-Wandlern (28) abgegebenen NF-Signale, die jeweils bei Beginn einer Ansage eingeschaltet und während einer Ansage über eine Sprachpausenerkennungsvorrichtung (32) in den vorgegebenen Sprachpausen abgeschaltet wird.

6. Elektronischer Textgeber nach einem der Ansprüche 1 bis 5, dadurch gekennzeichnet, daß er bis zu k Textgeberausgänge (A1...A8) besitzt, wobei die Steuerung mit einer Grundtaktfrequenz f0 erfolgt, mit der die Digital-Analog-Wandler (28) sowie gegebenenfalls der Auswahlzähler (26) angesteuert und die Parallel-Seriell-Wandler (27) ausgelesen werden, während die Steuerung des ersten Speicheradressenzählers (22) und das Einlesen der Daten in jeden Parallel-Seriell-Wandler (27) mit der Frequenz f0 / k und die Steuerung des zweiten Speicheradressenzählers (23) mit der Frequenz f0 / k : n erfolgt, wobei n die Anzahl der Zählschritte des ersten Speicheradressenzählers (22) zum Auslesen eines Speichersegments ist.

0081066

1/3

FIG.1

FIG.2

Zyklus Ansage

T0 Daten - D/A Wandler
T1 Auswahl - Z + 1
T2 Voreinst. Z.II
T4 P/S - Wandler
T5
T6

TA0 Zähler I + 1
T47 Freigabe Textprogr. sp.

T100H Freigabe Steuerung
T4H Zähler II + 1
T6H Laden Prog. S. Zw. Sp.

ADR 1 ⎫
ADR 2 ⎬ Ausw. Z.
ADR 4 ⎭

TT1 Datenübern. P/S - W.
TT2 "
TT3 "
TT4 "
TT5 "
TT6 "
TT7 "
TT8 "

←16μs→

2/3

0081066

Adressen — Dezimal / Hex — Textdaten / Binär

FIG. 3

Europäisches Patentamt

**EUROPÄISCHER RECHERCHENBERICHT**

EP 82 10 9416

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 662 348 (A. WEISS) <br> * Zusammenfassung; Figur 1; Figur 3C; Spalte 2, Zeilen 12-63; Spalte 3, Zeilen 24-32; Spalte 5, Zeilen 32-35; Spalte 6, Zeilen 35-52; Spalte 4, Zeile 19-32 * <br> --- | 1 | G 06 F 3/16 |
| Y | US-A-4 069 970 (BUZZARD et al.) <br> * Zusammenfassung; Figuren 3A,B,10; Spalte 1, Zeilen 30-67; Spalte 4, Zeilen 3-12; Ansprüche 5,11 * <br> --- | 1 | |
| A | PROCEEDINGS OF THE FALL JOINT COMPUTER CONFERENCE, Dezember 9-11, 1968, San Francisco, A.F.I.P.S. Band 33, Seiten 949-955, Washington, USA <br> H.S. STONE: "Associative processing for general purpose computers through the use of modified memories" * Seite 949 und Seite 950; Figur 1 * <br> --- | 1 | RECHERCHIERTE SACHGEBIETE (Int. Cl. ³) <br><br> G 06 F <br> H 04 M |
| A | ELECTRONICS, Band 51, nr. 3, 2. Februar 1978, Seiten 6E - 10E "Flexible voice response unit will have many messages for telephone subscribers" <br> ----- | | |

Der vorliegende Recherchenbericht wurde für alle Patentansprüche erstellt.

| Recherchenort <br> DEN HAAG | Abschlußdatum der Recherche <br> 21-03-1983 | Prüfer <br> BECKER K.H. |
|---|---|---|